# EUROPÄISCHE PATENTSCHRIFT

(11) **EP 3 459 706 B1**
(45) Veröffentlichungstag und Bekanntmachung des Hinweises auf die Patenterteilung: **30.08.2023**
(21) Anmeldenummer: 17193000.1
(22) Anmeldetag: 25.09.2017
(51) Int. Cl.: B29C 45/16, F16H 55/06, B29C 37/00, F16H 1/06

(54) **STIRNRAD ZUR VERWENDUNG IN EINEM STIRNRADGETRIEBE, ZAHNRADPAARUNG FÜR EIN STIRNRADGETRIEBE, STIRNRADGETRIEBE MIT EINER DERARTIGEN ZAHNRADPAARUNG SOWIE VERFAHREN ZUM HERSTELLEN EINES STIRNRADS**
SPUR GEAR FOR USE IN A SPUR GEAR TRANSMISSION, GEAR PAIRING FOR SPUR GEAR TRANSMISSION, SPUR GEAR TRANSMISSION WITH SUCH A GEAR PAIRING AND METHOD FOR PRODUCING A SPUR GEAR
ROUE CYLINDRIQUE DESTINÉE À ÊTRE UTILISÉE DANS UN ENGRENAGE CYLINDRIQUE, ENGRENAGE POUR UN ENGRENAGE CYLINDRIQUE, ENGRENAGE CYLINDRIQUE DOTÉ D'UN TEL ENGRENAGE AINSI QUE PROCÉDÉ DE FABRICATION D'UNE ROUE CYLINDRIQUE

(43) Veröffentlichungstag der Anmeldung: 27.03.2019
(73) Patentinhaber: IMS Gear SE & Co. KGaA, 78166 Donaueschingen (DE)
(72) Erfinder: Koop, Matthias, 78166 Donaueschingen (DE); Oberle, Stephan, 78050 Villingen-Schwenningen (DE); Melinkov, Egor, 79822 Titisee-Neustadt (DE); Stoppel, Eugen, 78357 Mühlingen (DE); Birk, Sebastian, 78647 Trossingen (DE)
(74) Vertreter: Westphal, Mussgnug & Partner Patentanwälte mbB

(56) Entgegenhaltungen:
- EP-A1- 1 777 439
- DE-A1-102012 102 778
- DE-A1-102012 102 780
- JP-A- 2002 333 059
- US-A- 3 200 665
- US-A- 3 683 714
- US-A1- 2007 086 907
- US-A1- 2013 228 028
- US-A1- 2014 007 724
- US-A1- 2017 021 807
- US-A1- 2017 095 950
- Prof. Dr. Ing Andreas Ettemeyer ET AL: "Konstruktionselemente", , 1. März 2007 (2007-03-01), XP055479300, Gefunden im Internet: URL:http://me-lrt.de/schragverzahnte-profi lverschobene-getriebestufe [gefunden am 2018-05-29]
- Friedemann Sebastian Winkler: "28 - Schrägverzahnte profilverschobene Getriebestufe", , 11. September 2017 (2017-09-11), XP055479326, Gefunden im Internet: URL:http://me-lrt.de/schragverzahnte-profi lverschobene-getriebestufe [gefunden am 2018-05-29]
- Anonymous: "Technische Kunststoffe - Wikipedia", , 2 June 2020 (2020-06-02), XP055700218, Retrieved from the Internet: URL:https://de.wikipedia.org/wiki/Technisc he_Kunststoffe [retrieved on 2020-06-02]
- Nigel N: "Crystalline vs. Amorphous Polymers", , 2 June 2020 (2020-06-02), XP055700242, Retrieved from the Internet: URL:https://www.mcpolymers.com/library/cry stalline-vs.-amorphous-polymers [retrieved on 2020-06-02]

## Beschreibung

Die vorliegende Erfindung betrifft ein Stirnrad zur Verwendung in einem Stirnradgetriebe, eine Zahnradpaarung für ein Stirnradgetriebe, ein Stirnradgetriebe mit einer derartigen Zahnradpaarung sowie Verfahren zum Herstellen eines Stirnrads, welches für ein derartiges Stirnradgetriebe verwendet wird.

Stirnradgetriebe stellen eine weit verbreitete Ausbildung von Getrieben dar, da sie einen vergleichsweise einfachen Aufbau aufweisen. Im Vergleich zu Planetengetrieben werden keine Hohlräder benötigt, die einen höheren Fertigungsaufwand erfordern. Im Vergleich zu Schneckengetrieben ist der Aufbau deshalb einfacher, da keine relativ aufwendig zu fertigenden Schneckenräder und Schnecken benötigt werden.

Die Stirnräder der Zahnradpaarungen von Stirnradgetrieben, die hohen mechanischen Belastungen und hohen Temperaturschwankungen ausgesetzt sind, werden üblicherweise aus Metall gefertigt. Temperaturschwankungen können beispielsweise dann auf das Stirnradgetriebe einwirken, wenn das Stirnradgetriebe in der Nähe eines Verbrennungsmotors eines Fahrzeugs angeordnet ist. Durch die Verwendung von Metall kommt es aber zu einer relativ hohen Geräuschentwicklung im Betrieb des Stirnradgetriebes, was als nachteilig empfunden wird.

Die Geräuschentwicklung kann dadurch reduziert werden, dass zumindest ein Stirnrad der Zahnradpaarung aus Kunststoff gefertigt wird, wodurch der weitere Vorteil der Gewichtsreduzierung erzielt werden kann. Ein derartiges Stirnradgetriebe ist in der DE 10 2010 006 306 A1 offenbart. Allerdings treten bei hohen mechanischen Belastungen und/oder hohen Temperaturen entsprechend hohe Verformungen in den Stirnrädern auf, was zu Eingriffsstörungen und Spannungserhöhungen in der Zahnradpaarung führt. Neben dem Einsatz von Kunststoff lässt sich die Geräuschentwicklung mittels einer Schrägverzahnung reduzieren. Bei der Verwendung von Schrägverzahnungen treten jedoch Axialkräfte auf, wodurch Kippmomente in die Stirnräder eingeleitet werden. Die Kippmomente führen zu Verformungen der Stirnräder und zu Tragbildverschiebungen, die zu erhöhtem Verschleiß und einer erhöhten Geräuschentwicklung führen.

Weitere Stirnräder sind in der EP 1 777 439 A1, der US 2014-007724 A1, der US 2013/228028 A1, der DE 10 2012 102 780 A1, der DE 10 2012 102 778 A1, der US 3 200 665 A, der US 2017/095950 A1, der US 2017/021807 A1, der US 2007/086 907 A1 und der US 3 683 714 A offenbart.

Folgende relevante Internet-Publikation findet sich unter folgenden Links:
https://me-lrt.de/schragverzahnte-profilverschobenegetriebestufe

Wegen der hohen Bandbreite der mechanischen Belastungen und Temperaturschwankungen können keine diesen Verformungen entgegenwirkenden Verzahnungskorrekturen vorgenommen werden, da diese nur für bestimmte Betriebszustände, bei denen die mechanischen Belastungen und die Temperaturen in relativ engen Grenzen schwanken, zielführend sind. Außerhalb dieser Grenzen können die Verzahnungskorrekturen kontraproduktiv wirken.

Der Einsatz von faserverstärkten Werkstoffen, die eine erhöhte Steifigkeit aufweisen, ist in der Regel nicht möglich, da diese an den Zähnen einen erhöhten Verschleiß und einen Faserabrieb hervorrufen. Eine gewisse Verformung in Umfangsrichtung ist wünschenswert, um Zahnformfehler auszugleichen, die Profil- und Sprungüberdeckung bei erhöhter Belastung zu erhöhen und die Verformung zur Dämpfung zu nutzen, was mit faserverstärkten Werkstoffen nur sehr bedingt möglich ist.

Im Vergleich zu Stirnrädern aus Metall weisen Stirnräder aus Kunststoff eine erhöhte Wärmeausdehnung auf. Daher kommt es bei hohen Temperaturen zu einer Vergrößerung des Durchmessers der Stirnräder der Zahnradpaarung und einer Reduzierung des Flankenspiels bis hin zum Verklemmen. Bei niedrigen Temperaturen vergrößert sich das Zahnspiel, was ebenfalls nicht wünschenswert ist, da bei einem vergrößerten Zahnspiel die Profilüberdeckung abnimmt und somit der Lauf unruhiger wird.

Der Einsatz von Stirnrädern aus Kunststoff in Stirnradgetrieben bei Anwendungen mit hoher mechanischer Belastung und hohen Temperaturschwankungen ist aufgrund der obigen Ausführungen auf wenige Anwendungsfälle beschränkt, wo spezielle und üblicherweise teure Kunststoffe eingesetzt werden können. Ein Einsatz in der Großserie lässt sich aus technischen und ökonomischen Erwägungen nicht darstellen.

Ein Ausweg aus dieser Situation ist beispielsweise in der DE 103 43 400 A1 dargestellt, welche einen Anlasserkranz zeigt, der ein sehr großes Einlegeteil aus Metall, dort als Teller bezeichnet, und einen sich radial nach außen hin anschließenden Zahnkranz aus Kunststoff umfasst. Die Herstellung eines derartigen Zahnrads ist aber aus folgenden Gründen schwierig: Entweder wird die Kunststoffschmelze zum Herstellen des Zahnkranzes im Punktangussverfahren um das Einlegeteil herum eingespritzt, wodurch am Aufeinandertreffen der Fließfronten Bindenähte entstehen, die potentielle Sollbruchstellen für den unter behinderter Schwundspannung stehenden Zahnkranz darstellen. Anstelle des Punktangussverfahrens kann ein Schirmangussverfahren verwendet werden, wodurch der Zahnkranz vom Zentrum aus bindenahtfrei hergestellt wird. Aufgrund des sehr großen Einlegeteils wird aber auch der Schirmanguss sehr groß, da die Kunststoffschmelze über eine relativ weite Distanz geführt werden muss, wodurch es zu einem großen Überstand kommt, der nachträglich entfernt werden muss, was zu zusätzlichen Herstellungskosten führt. Hierdurch geht viel wertvolles Material verloren.

Aufgabe einer Ausführungsform der vorliegenden Erfindung ist es daher, ein Stirnrad zur Verwendung in einem Stirnradgetriebe sowie eine Zahnradpaarung für ein Stirnradgetriebe anzugeben, mit welchem die oben genannten Nachteile beseitigt oder zumindest reduziert werden. Insbesondere sollen eine ein Zahnrad und eine Zahnradpaarung angegeben werden, welche auch bei hohen mechanischen Belastungen und hohen Temperaturschwankungen eine geringe Geräuschentwicklung und einen guten Eingriff bei geringem Verschleiß bereitstellt, wobei sich die Zahnradpaarung kostengünstig herstellen lassen soll.

Diese Aufgabe wird mit den in den Ansprüchen 1, 2 und 11 angegebenen Merkmalen gelöst. Vorteilhafte Ausführungsformen sind Gegenstand der Unteransprüche.

Eine Umsetzung der Erfindung betrifft ein Stirnrad zur Verwendung in einem Stirnradgetriebe, umfassend ein Außenteil mit einem Zahnkranz aus einem ersten Kunststoff und mit einer Anzahl von Anspritzabschnitten, ein Einlegeteil aus Metall, und ein zwischen dem Einlegeteil und dem Außenteil angeordnetes Verbindungsteil aus einem zweiten Kunststoff zum formschlüssigen Verbinden des Einlegeteils und des Außenteils, wobei die Anspritzabschnitte vom Verbindungsteil überdeckt sind.

Im Rahmen dieser Beschreibung soll unter einem ersten Kunststoff und einem zweiten Kunststoff Folgendes verstanden werden: Der erste Kunststoff und der zweiten Kunststoff sollen sich in jedem Fall in ihren mechanischen Eigenschaften unterscheiden, müssen sich aber chemisch nicht unbedingt unterscheiden. Beispielsweise kann einer der beiden Kunststoffe selbstverstärkend ("self-reinforced") sein. Um den Kunststoff selbstverstärkend auszuführen, können die Molekülstruktur und/oder die Kristallinität des Kunststoffs gezielt verändert werden. Hierdurch kann insbesondere die Zugfestigkeit gesteigert werden, ohne weitere Komponenten zusetzen zu müssen. Alternativ oder kumulativ kann einer der beiden Kunststoffe faserverstärkt sein, wodurch ebenfalls die Zugfestigkeit erhöht werden kann. Aufgrund dieser Maßnahmen kann die Zugfestigkeit des chemisch gesehen selben Kunststoffs bis zu einem Faktor 5 gesteigert werden.

In Stirnradgetrieben werden die Zahnräder sowohl um ihre Drehachse als auch entlang ihrer Drehachse belastet. Die Belastung entlang der Drehachse, auch als axiale Belastung bezeichnet, tritt insbesondere dann auf, wenn das Zahnrad eine Schrägverzahnung aufweist. Das hier vorgeschlagene Zahnrad weist insgesamt drei Teile auf, nämlich das Außenteil, das Verbindungsteil und das Einlegeteil. Am Übergang zwischen den drei Teilen müssen Vorkehrungen getroffen werden, um zu gewährleisten, dass die Kräfte und Momente ohne ein Verrutschen der drei Teile relativ zueinander übertragen werden können. Besonders kritisch ist der Übergang zwischen dem Außenteil und dem Verbindungsteil. Da das Außenteil aus einem anderen Kunststoff hergestellt ist als das Verbindungsteil, kann nur bedingt eine materialschlüssige Verbindung erzeugt werden. Um eine Übertragung der Kräfte und Momente ohne Verrutschen zu gewährleisten, werden Vertiefungen vorgesehen, in welche korrespondierende Vorsprünge eingreifen, so dass eine formschlüssige Verbindung zwischen dem Außenteil und dem Verbindungsteil vorliegt. Wie erläutert, muss die formschlüssige Verbindung sowohl entlang der Drehachse als auch um die Drehachse ein Verrutschen des Außenteils und des Verbindungsteils relativ zueinander verhindern. Entsprechend müssen die Vertiefungen und Vorsprünge geformt sein. Um ein Verrutschen sowohl entlang als auch um die Drehachse zu verhindern, entstehen zumindest auf einem Teil Hinterschneidungen, so dass das betreffende Teil nicht ohne Schieber gegossen, insbesondere spritzgegossen werden kann, was den Spritzgussvorgang aufwendig und damit teuer macht.

Um das vorschlagsgemäße Stirnrad dennoch günstig herstellen zu können, wird zunächst das Außenteil gegossen, das eine Anzahl von Vertiefungen aufweist, die radial nach innen begrenzt sein können. Die Vertiefungen können auch als Bohrungen ausgeführt sein und so gestaltet werden, dass keine Hinterschneidungen entstehen und somit keine Schieber beim Spritzgussvorgang benötigt werden.

Anschließend wird das Verbindungsteil zwischen das Außenteil und das Einlegeteil gespritzt, wobei das Außenteil als Formgebungselement insbesondere für die Vorsprünge des Verbindungsteils dient. Da das Außenteil und das Verbindungsteil ohnehin miteinander verbunden werden sollen, ist ein Entformen nicht notwendig, weshalb man keine Schieber benötigt, auch wenn die Vorsprünge des Verbindungsteils zu Hinterschneidungen führen. Folglich kann das vorschlagsgemäße Stirnrad kostengünstig hergestellt werden.

Aufgrund der Tatsache, dass das Außenteil spritzgegossen wird, weist es eine Anzahl von Anspritzabschnitten auf. Unter Anspritzabschnitten sollen im Folgenden Abschnitte an der Oberfläche und/oder in der Nähe der Oberfläche des fertigen Außenteils verstanden werden, welche gegenüber dem übrigen Außenteil aufgrund des verwendeten Spritzgussverfahrens abweichende Eigenschaften aufweisen. Anspritzabschnitte können beispielsweise in Form von Anspritzflächen auftreten, in welchen das Außenteil eine gegenüber den übrigen Oberflächen geänderte Oberflächenbeschaffenheit aufweist. Anspritzabschnitte können auch in Form von Anspritzpunkten auftreten, in denen die Struktur des Kunststoffes von der des übrigen Bauteils abweicht. Wie bereits ausgeführt, wird das Verbindungsteil zwischen das Außenteil und das Einlegeteil gespritzt. Dies setzt voraus, dass zunächst das Außenteil und danach das Verbindungsteil gespritzt werden. Vorschlagsgemäß werden die Anspritzabschnitte des Außenteils so gelegt, dass sie im fertiggestellten Stirnrad vom Verbindungsteil überdeckt sind. Die vorschlagsgemäße Anordnung der Anspritzabschnitte des Außenteils führt zu einer guten Verteilung des verflüssigten ersten Kunststoffs während der Herstellung des Außenteils, wodurch das Außenteil sehr homogen gefertigt und die Bildung von Lunkern und Vakuolen vermieden werden kann.

Erfindungsgemäß weist das Verbindungsteil zumindest entlang einer Drehachse des Stirnrads Hinterschneidungen auf. Unter der Drehachse des Stirnrads ist die Achse zu verstehen, um welche sich das Stirnrad im Betrieb in einem Stirnradgetriebe dreht. Das Einlegeteil und das Außenteil sind konzentrisch zur Drehachse des Verbindungsteils angeordnet. Die entlang der Drehachse ausgebildeten Hinterschneidungen haben zur Folge, dass die Formen des Spritzgusswerkzeugs ohne die Verwendung von Schiebern entlang der Drehachse nicht geöffnet werden können.

Um das vorschlagsgemäße Stirnrad dennoch günstig herstellen zu können, wird zunächst das Außenteil gegossen, das eine Anzahl von Vertiefungen aufweist, die radial nach innen begrenzt sind. Die Vertiefungen können auch als Bohrungen ausgeführt sein und so gestaltet werden, dass keine Hinterschneidungen entstehen und somit keine Schieber beim Spritzgussvorgang benötigt werden.

Anschließend wird das Verbindungsteil zwischen das Außenteil und das Einlegeteil gespritzt, wobei das Außenteil als Formgebungselement insbesondere für die Vorsprünge des Verbindungsteils dient. Wie bereits erwähnt, müssen das Außenteil und das Verbindungsteil ohnehin miteinander verbunden werden. Folglich ist ein Entformen nicht notwendig, weshalb man keine Schieber benötigt, auch wenn die Vorsprünge des Verbindungsteils Hinterschneidungen bilden.

Bei dem vorschlagsgemäßen Stirnrad kann das Verbindungsteil die Hinterschneidungen aufweisen und die Anspritzabschnitte des Außenteils vom Verbindungsteil verdeckt sein.

Gemäß einer fortgebildeten Umsetzung ist der erste Kunststoff ein teilkristalliner Hochleistungsthermoplast aus der Familie der Polyaryletherketone (PAEK) oder PPS (Polyphenylensulfid) oder PPA (Polyphthalamid) und der zweite Kunststoff ist ein sich vom ersten Kunststoff in seinen mechanischen Eigenschaften unterscheidender Kunststoff oder ein sich vom ersten Kunststoff in seinen mechanischen und chemischen Eigenschaften unterscheidender Kunststoff. Wie bereits eingangs erwähnt, ist das Außenteil mit dem Zahnkranz hohem Verschleiß ausgesetzt, den man mit Hochleistungsthermoplasten besonders wirkungsvoll begegnen kann, ohne dass die Hochleistungsthermoplaste faserverstärkt werden müssen. Als Hochleistungsthermoplaste eignen sich insbesondere die teilkristallinen Hochleistungsthermoplaste der Familie der Polyaryletherketone (PAEK) wie PEK (Polyetherketon), PEEK (Polyetheretherketon) oder PEKK (Polyetherketoneketon). Ebenfalls eignen sich PPS (Polyphenylensulfid) oder PPA (Polyphthalamid). Auch der zweite Kunststoff kann ein Hochleistungsthermoplast sein, so dass auch Ausführungsformen denkbar sind, in denen das Verbindungsteil und das Außenteil aus demselben Kunststoff gefertigt werden. In diesem Fall bietet es sich aber an, den zweiten Kunststoff, aus dem das Verbindungsteil gefertigt ist, faserverstärkt auszuführen, um die axiale Steifigkeit zu erhöhen. Die Verwendung von faserverstärkten Kunststoffen für das Außenteil mit dem Zahnkranz ist insofern nachteilig, als dass hierdurch am Zahnkranz ein erhöhter Verschleiß einstellen würde und es zu einem Faserabrieb oder Faserbruch kommen kann. Insbesondere dann, wenn der zweite Kunststoff des Verbindungsteils faserverstärkt ist, können auch weniger hochwertige und damit günstigere Kunststoffe wie technische Thermoplaste, beispielsweise teilkristalline Thermoplaste wie PET (Polyethylenterephthalat), PA (Polyamid) oder POM (Polyoxymethylen) einsetzen. Auch können Duroplaste wie Polyester verwendet werden.

Eine Ausführungsform der Erfindung betrifft eine Zahnradpaarung für ein Stirnradgetriebe, umfassend ein erstes Stirnrad, und ein zweites Stirnrad nach der zuvor erläuterten Umsetzung der vorliegenden Erfindung, wobei das erste Stirnrad und das zweite Stirnrad miteinander kämmend in Eingriff stehen, das erste Stirnrad ganz oder teilweise aus Metall oder Kunststoff besteht und das zweite Stirnrad ein Außenteil mit einem Zahnkranz aus einem ersten Kunststoff und mit einer Anzahl von Anspritzabschnitten, ein Einlegeteil aus Metall, und ein zwischen dem Einlegeteil und dem Außenteil angeordnetes Verbindungsteil aus einem zweiten Kunststoff zum formschlüssigen und/oder materialschlüssigen Verbinden des Einlegeteils und des Außenteils umfasst.

Das Volumen des den Zahnkranz aufweisenden Außenteils des zweiten Stirnrads ist im Vergleich zu bekannten Stirnrädern aus Kunststoff deutlich geringer, so dass das Volumen des für das Außenteil verwendeten ersten Kunststoffs deutlich reduziert werden kann. Hieraus ergibt sich die Möglichkeit, als ersten Kunststoff einen hochwertigen und damit einhergehend häufig auch teuren Kunststoff zu verwenden, ohne dass die Gesamtkosten des zweiten Zahnrads nicht in unvertretbarer Weise gesteigert werden. Für den ersten Kunststoff kann ein Kunststoff gewählt werden, der besonders abriebarm ist. Insbesondere kann ein unverstärkter Kunststoff verwendet werden. Der Nachteil von unverstärktem Kunststoff der großen Wärmeausdehnung fällt aufgrund des geringen Volumens des Außenteils nur in tolerierbaren Grenzen ins Gewicht.

Dadurch, dass der Zahnkranz des zweiten Stirnrads aus einem anderen Kunststoff bestehen kann als das Verbindungsteil, kann der zweite Kunststoff des Verbindungsteil so gewählt werden, dass das Verbindungsteil besonders steif ist und sich somit nur in geringem Umfang in axialer Richtung verformt. Weiterhin kann für den ersten Kunststoff ein Kunststoff gewählt werden, der eine geringe Wärmeausdehnung aufweist.

Aus den obigen Erläuterungen wird deutlich, dass aufgrund der Tatsache, dass der Zahnkranz und das Verbindungsteil aus unterschiedlichen Kunststoffen bestehen können, die Kunststoffe für die jeweilige Aufgabe optimal ausgewählt werden können. Während für das Verbindungsteil insbesondere eine hohe axiale Steifigkeit und eine geringe Wärmeausdehnung bei einer gleichzeitigen Verwendung eines kostengünstigen Kunststoffs im Vordergrund stehen, steht für den Zahnkranz ein abriebarmer Eingriff im Vordergrund. Die vorschlagsgemäße Gestaltung des zweiten Stirnrads ermöglicht es, auch bei hohen mechanischen Belastungen und Temperaturschwankungen eine geräuscharme Zahnradpaarung anzugeben, die einen im Vergleich zu bekannten Lösungen einen verbesserten Eingriff und einen geringeren Verschleiß aufweist.

Die Anspritzabschnitte können vom Verbindungsteil überdeckt sein. Die Anordnung der Anspritzabschnitte am Außenteil derart, dass sie vom Verbindungsteil überdeckt werden, führt zu einer guten Verteilung des verflüssigten Kunststoffs während der Herstellung des Außenteils, so dass das Außenteil sehr homogen ausgestaltet ist und die Bildung von Lunkern und/oder Vakuolen unterdrückt werden.

Das Verbindungsteil kann zumindest entlang einer Drehachse des Stirnrads Hinterschneidungen aufweisen. Die entlang der Drehachse ausgebildeten Hinterschneidungen haben zur Folge, dass die Formen des Spritzgusswerkzeugs ohne die Verwendung von Schiebern entlang der Drehachse nicht geöffnet werden können. Um das vorschlagsgemäße Stirnrad bzw. die vorschlagsgemäße Zahnradpaarung dennoch günstig herstellen zu können, wird zunächst das Außenteil gegossen, welches radial nach innen und/oder axial nach außen weisende Vorsprünge aufweist. Die Vorsprünge können so gestaltet werden, dass keine Hinterschneidungen entstehen und somit keine Schieber beim Spritzgussvorgang benötigt werden.

Nach Maßgabe einer weiteren Ausführungsform weisen das zweite Stirnrad einen Stirnraddurchmesser und das Einlegeteil einen Einlegeteildurchmesser auf, wobei das Verhältnis zwischen dem Einlegeteildurchmesser und dem Stirnraddurchmesser zwischen 0,1 und 0,8 und insbesondere zwischen 0,1 und 0,5 beträgt. Als Stirnraddurchmesser kann der Teilkreisdurchmesser des zweiten Stirnrads verwendet werden. Wie aus der DE 103 43 400 A1 ersichtlich, ist das Einlegeteil bei bekannten Stirnrädern sehr groß und weist einen Einlegeteildurchmesser auf, der üblicherweise deutlich größer ist als die Hälfte des Stirnraddurchmessers. Die vorschlagsgemäße Möglichkeit, den Einlegeteildurchmesser auf Werte unter dem 0,5-fachen des Stirnraddurchmessers zu reduzieren, führt zu einer deutlichen Gewichtsreduzierung des Stirnrads.

In einer weitergebildeten Ausführungsform können das erste Stirnrad eine erste Breite und das zweite Stirnrad eine zweite Breite aufweisen, wobei die erste Breite größer als die zweite Breite ist. Diese Ausführungsform bietet sich insbesondere dann an, wenn das erste Stirnrad oder zumindest der Zahnkranz des ersten Stirnrads aus Metall besteht. Aufgrund der größeren Breite des ersten Stirnrads wird verhindert, dass die scharfe Stirnkante des Zahnkranzes aus Metall des ersten Stirnrads in den Zahnkranz aus dem ersten Kunststoff einläuft und damit zu erhöhtem Verschleiß führt.

Bei einer weitergebildeten Ausführungsform können das erste Stirnrad und das zweite Stirnrad jeweils einen Schrägungswinkel von zwischen 10° und 30° aufweisen. Die hierdurch realisierte Schrägverzahnung bewirkt eine bessere Laufruhe, da der Eingriff der Stirnräder gleichmäßiger verläuft und mehrere Zähne gleichzeitig im Eingriff stehen. Allerdings treten bei der Schrägverzahnung Axialkräfte auf, die die Stirnräder seitlich auseinander schieben und daher verformen. Diese Axialkräfte können aber mit einer entsprechenden Wahl des zweiten Kunststoffs für das Verbindungsteil sicher aufgenommen werden, so dass das zweite Stirnrad keine oder nur geringe axiale Verformungen erfährt und es daher nicht zu Fehleingriffen kommt.

Bei einer weiteren Ausführungsform kann das Verbindungsteil Verstärkungen zum Erhöhen der axialen Steifigkeit aufweisen. Diese Ausführungsform bietet sich insbesondere bei Schrägverzahnungen an. Die Verstärkungen können beispielsweise in Form von Rippen oder in Form von Fasern realisiert werden. Die erhöhte axiale Steifigkeit vermindert die axialen Verformungen, so dass Fehleingriffe infolge von axialen Verformungen gering gehalten werden.

In einer weiteren Ausführungsform ist das erste Stirnrad genauso aufgebaut wie das zweite Stirnrad. Folglich weist auch das erste Stirnrad in dieser Ausführungsform ein Außenteil mit einem Zahnkranz aus einem ersten Kunststoff, ein Einlegeteil aus Metall, und ein zwischen dem Einlegeteil und dem Außenteil angeordnetes Verbindungsteil aus einem zweiten Kunststoff zum formschlüssigen und/oder materialschlüssigen Verbinden des Einlegeteils und des Außenteils auf. Die technischen Effekte, die für das zweite Stirnrad beschrieben worden sind, gelten in dieser Ausführungsform genauso für das erste Stirnrad. Die technischen Effekte addieren sich somit.

Eine Ausgestaltung der Erfindung betrifft ein Stirnradgetriebe, umfassend eine Zahnradpaarung nach einem der vorherigen Ausführungsformen, wobei das erste Stirnrad mit einer Antriebswelle und das zweite Stirnrad mit einer Abtriebswelle oder umgekehrt verbunden sind und das erste Stirnrad mit dem zweiten Stirnrad kämmend in Eingriff steht. Eine zu erwähnende Eigenschaft von Stirnradgetrieben ist die parallele, aber versetzte Anordnung von Antriebswelle und Abtriebswelle. Die technischen Effekte und Vorteile, die sich mit dem vorschlagsgemäßen Stirnradgetriebe erreichen lassen, entsprechen denjenigen, die für die vorschlagsgemäße Zahnradpaarung erörtert worden sind. Zusammenfassend sei darauf hingewiesen, dass es die vorschlagsgemäße Gestaltung des Stirnradgetriebes ermöglicht, auch bei hohen mechanischen Belastungen und Temperaturschwankungen einen geräuscharmen Lauf bereitzustellen. Weiterhin können ein im Vergleich zu bekannten Lösungen verbesserter Eingriff und ein geringerer Verschleiß erzielt werden.

In einer weiteren Ausgestaltung kann das Stirnradgetriebe eine Profilüberdeckung zwischen 1 und 2 aufweisen. Die Profilüberdeckung gibt an, wie viele Zahnpaare statistisch gleichzeitig in Eingriff stehen. Um eine kontinuierliche Übertragung des Drehmoments zu gewährleisten, muss der Überdeckungsgrad mindestens 1 betragen. Wenn der Wert des Überdeckungsgrads zwischen 1 und 2 beträgt, kann eine kontinuierliche Übertragung des Drehmoments gewährleistet werden.

In einer weitergebildeten Ausgestaltung weist das Stirnradgetriebe eine Sprungüberdeckung mit den Werten 0 oder 1 oder 2 auf. Insbesondere die Werte 1 und 2 für die Sprungüberdeckung sind im Rahmen der Fertigungsgenauigkeiten zu sehen, so dass sich die Werte 1 und 2 in der Praxis nur annäherungsweise realisieren lassen. Die Sprungüberdeckung ist ein Maß dafür, wie weit sich das Zahnrad zwischen den Eingriffen an einer Stirnkante und ab der gegenüberliegenden Stirnkante weiterdreht. Bei einer Geradverzahnung ergibt sich eine Sprungüberdeckung von 0, während sich bei einem Wert von 1 die Situation ergibt, dass das nachfolgende Zahnpaar genau dann beginnt außer Eingriff zu laufen, wenn der Eingriff des vorherigen Zahnpaares beendet ist. Bei einem Wert von 2 beginnt eine Zahnradpaarung genau dann außer Eingriff zu laufen, wenn das vorvorherige Zahnpaar gerade komplett außer Eingriff gelaufen ist und dessen Eingriff beendet ist. In diesem Fall ergibt sich ein besonders stoßarmer und ruhiger Lauf des Stirnradgetriebes.

Eine Ausführung der Erfindung betrifft die Verwendung eines Stirnrads für Stirnradgetriebe, wobei das Stirnrad ein Außenteil mit einem Zahnkranz aus einem ersten Kunststoff und mit einer Anzahl von Anspritzabschnitten, ein Einlegeteil aus Metall, und ein zwischen dem Einlegeteil und dem Außenteil angeordnetes Verbindungsteil aus einem zweiten Kunststoff zum formschlüssigen und/oder materialschlüssigen Verbinden des Einlegeteils und des Außenteils umfasst, wobei die Anspritzabschnitte vom Verbindungsteil überdeckt sind.

Weiterhin betrifft die Erfindung die Verwendung eines Stirnrads für Stirnradgetriebe, wobei das Stirnrad ein Außenteil mit einem Zahnkranz aus einem ersten Kunststoff und mit einer Anzahl von Anspritzabschnitten, ein Einlegeteil aus Metall, und ein zwischen dem Einlegeteil und dem Außenteil angeordnetes Verbindungsteil aus einem zweiten Kunststoff zum formschlüssigen und/oder materialschlüssigen Verbinden des Einlegeteils und des Außenteils umfasst, wobei das Verbindungsteil zumindest entlang einer Drehachse des Stirnrads Hinterschneidungen aufweist.

Die technischen Effekte und Vorteile, die sich mit dem vorschlagsgemäßen Stirnrad erreichen lassen, entsprechen denjenigen, die für die vorliegende Zahnradpaarung erörtert worden sind. Zusammenfassend sei darauf hingewiesen, dass es die vorschlagsgemäße Verwendung des Stirnradgetriebes ermöglicht, auch bei hohen mechanischen Belastungen und hohen Temperaturen einen geräuscharmen Lauf bereitzustellen. Weiterhin können ein im Vergleich zu bekannten Lösungen verbesserter Eingriff und ein geringerer Verschleiß erzielt werden.

Eine weitere Ausbildung der Erfindung betrifft ein Verfahren zum Herstellen eines Stirnrads, wobei das Stirnrad ein Außenteil mit einem Zahnkranz aus einem ersten Kunststoff, ein Einlegeteil aus Metall, und ein zwischen dem Einlegeteil und dem Außenteil angeordnetes Verbindungsteil aus einem zweiten Kunststoff zum formschlüssigen und/oder materialschlüssigen Verbinden des Einlegeteils und des Außenteils umfasst, und das Verfahren folgenden Schritt aufweist:
- Spritzgießen des Außenteils unter Ausbildung einer Anzahl von Anspritzabschnitten, und
- Spritzgießen des Verbindungsteils zwischen das Außenteil und das Einlegeteil derart, dass die Anspritzabschnitte vom Verbindungsteil überdeckt werden und das Verbindungsteil zumindest entlang einer Drehachse des Stirnrads Hinterschneidungen aufweist.

Wie bereits erläutert, werden in Stirnradgetrieben die Zahnräder sowohl um ihre Drehachse als auch entlang ihrer Drehachse belastet. Um eine Übertragung der Kräfte und Momente zwischen dem Außenteil und dem Verbindungsteil ohne Verrutschen zu gewährleisten, werden Vertiefungen vorgesehen, in welche korrespondierende Vorsprünge eingreifen, so dass eine formschlüssige Verbindung zwischen dem Außenteil und dem Verbindungsteil vorliegt. Damit die formschlüssige Verbindung sowohl entlang der Drehachse als auch um die Drehachse ein Verrutschen des Außenteils und des Verbindungsteils relativ zueinander verhindern kann, müssen die Vertiefungen und Vorsprünge entsprechend geformt sein. Um eine formschlüssige Verbindung bereitzustellen und um das Verrutschen sowohl entlang als auch um die Drehachse zu verhindern, entstehen zumindest auf einem Teil Hinterschneidungen, so dass das betreffende Teil nicht ohne Schieber gegossen, insbesondere spritzgegossen werden kann, was den Spritzgussvorgang aufwendig und damit teuer macht.

Um das vorschlagsgemäße Stirnrad dennoch günstig herstellen zu können, wird zunächst das Außenteil gegossen, das eine Anzahl von Vertiefungen aufweist, die radial nach innen begrenzt sein können. Die Vertiefungen können auch als Bohrungen ausgeführt sein und so gestaltet werden, dass keine Hinterschneidungen entstehen und somit keine Schieber beim Spritzgussvorgang benötigt werden.

Anschließend wird das Verbindungsteil zwischen das Außenteil und das Einlegeteil gespritzt, wobei das Außenteil als Formgebungselement insbesondere für die Vorsprünge des Verbindungsteils dient. Da das Außenteil und das Verbindungsteil ohnehin miteinander verbunden werden sollen, ist ein Entformen nicht notwendig, weshalb man keine Schieber benötigt, auch wenn das Verbindungsteil Hinterschneidungen aufweist. Folglich kann das vorschlagsgemäße Stirnrad kostengünstig hergestellt werden.

Das vorschlagsgemäße Verfahren ermöglicht aufgrund der Tatsache, dass zuerst das Außenteil und dann das Verbindungsteil spritzgegossen werden, die kostengünstige Herstellung des vorliegenden Stirnrads. Da das Außenteil spritzgegossen wird, weist es die Anspritzabschnitte auf. Unerheblich ist, ob der Schritt des Bereitstellens des Einlegeteils vor oder nach dem Spritzgießen des Außenteils durchgeführt wird. Entscheidend ist, dass der Schritt des Spritzgießend des Außenteils vor dem Spritzgießen des Verbindungsteils erfolgt. Hieraus ergibt sich nicht nur der Vorteil, dass auf einen Schieber beim Spritzguss verzichtet werden kann, sondern auch, dass das Außenteil, welches den Zahnkranz trägt, frei von Spannungen bleibt, die in das Außenteil eingetragen werden, wenn erst das Verbindungsteil und anschließend das Außenteil spritzgegossen wird. Aufgrund der Lage der Anspritzabschnitte im Außenteil kann sich der verflüssigte Kunststoff gut verteilen, so dass das Außenteil sehr homogen und frei von Lunkern und Vakuolen gefertigt werden kann. Die Wahrscheinlichkeit eines Bruchs eines Zahns oder einer anderen Beschädigung des Zahnkranzes wird somit verringert.

Das Verbindungsteil kann beispielsweise unter Verwendung des Schirmangussverfahrens oder des Punktangussverfahrens spritzgegossen werden. Beim Schirmangussverfahren bilden sich die Anspritzabschnitte üblicherweise als eine zusammenhängende Anspritzfläche aus, während sich beim Punktangussverfahren die Anspritzabschnitte als eine Anzahl von Anspritzpunkten ausbilden. Das Schirmangussverfahren hat den Vorteil, dass das Verbindungsteil ohne Bindenähte und mit einer sehr hohen Rundlaufgenauigkeit gefertigt werden kann. Prinzipbedingt führt das Schirmangussverfahren zu einem mehr oder weniger stark ausgeprägten Überstand, welcher in einem weiteren Verfahrensschritt spanend entfernt werden muss. Da im Schirmangussverfahren die Kunststoffschmelze über einen zentral angeordneten Spritzgusskanal eingespritzt wird, muss ein schirmförmiger Werkzeugeinsatz verwendet werden, um zu verhindern, dass die Kunststoffschmelze in den vom Einlegeteil umschlossenen Hohlraum eindringt. Hierdurch wird die Fertigung aufwendig und folglich verteuert.

Beim Punktangussverfahren wird der Kunststoff durch eine Anzahl von Spritzgusskanälen, die typischerweise konzentrisch um das Einlegeteil angeordnet sind, in den Zwischenraum zwischen dem Außenteil und dem Einlegeteil gespritzt. Das hierdurch hergestellte Verbindungsteil weist zwar Bindenähte auf, es ist aber kein Überstand vorhanden, welcher in einem weiteren Arbeitsgang entfernt werden muss. Ferner ist kein schirmförmiger Werkzeugeinsatz erforderlich. Insofern ist das Punktangussverfahren günstiger im Vergleich zum Schirmangussverfahren.

Beispielhafte Ausführungsformen der Erfindung werden im Folgenden unter Bezugnahme auf die beigefügten Zeichnungen näher erläutert. Es zeigen
- Figur 1: eine perspektivische Darstellung einer Ausführungsform einer erfindungsgemäßen Zahnradpaarung,
- Figur 2: eine prinzipielle Schnittdarstellung durch ein erfindungsgemäßes zweites Stirnrad,
- Figur 3: eine perspektivische, explodierte Darstellung durch ein erfindungsgemäßes zweites Stirnrad,
- Figur 4a: eine perspektivische Darstellung des Außenteils des zweiten Stirnrads,
- Figur 4b: eine vergrößerte Darstellung des in Figur 4a gekennzeichneten Ausschnitts A,
- Figur 4c: eine perspektivische Darstellung des Verbindungsteils des zweiten Stirnrads,
- Figur 4d: eine vergrößerte Darstellung des in Figur 4c gekennzeichneten Ausschnitts B,
- Figur 4e: eine prinzipielle Schnittdarstellung durch das Verbindungsteil,
- Figur 5a - 5b: jeweils eine prinzipielle Abwicklung des Außenteils,
- Figur 6a - 6c: verschiedene prinzipielle Darstellungen des Spritzgussverfahrens zum Herstellen des Außenteils des zweiten Stirnrads: a: Schirmanguss, b: radialer Sternanguss, c: stirnseitiger Punktanguss,
- Figur 7a: eine Draufsicht auf ein zweites Stirnrad nach der Entformung aus dem Spritzgusswerkzeug,
- Figur 7b: eine prinzipielle Schnittdarstellung durch ein Spritzgusswerkzeug zur Herstellung eines erfindungsgemäßen zweiten Stirnrads im Schirmangussverfahren unter Verwendung der in Figur 7a definierten Schnittebene A-A,
- Figur 7c: eine perspektivische Darstellung eines zweiten Stirnrads nach der Entformung aus dem Spritzgusswerkzeug,
- Figur 8: eine prinzipielle Darstellung zur Erläuterung des Punktangussverfahrens,
- Figur 9: eine prinzipielle Darstellung eines Stirnradgetriebes mit einer erfindungsgemäßen Zahnradpaarung, und
- Figur 10: eine prinzipielle Abwicklung der Zahnkränze des ersten und des zweiten Stirnrads,

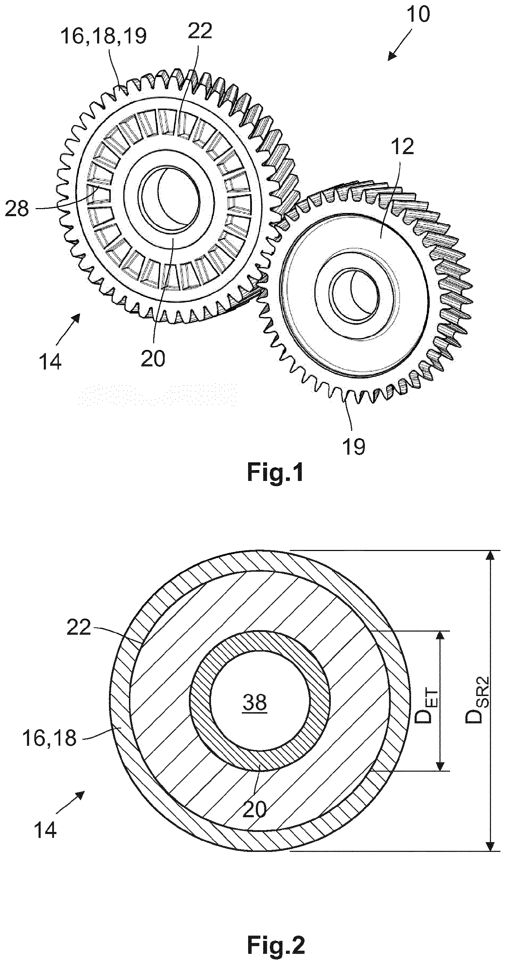

In Figur 1 ist ein Ausführungsbeispiel einer erfindungsgemäßen Zahnradpaarung 10 anhand einer perspektivischen Darstellung gezeigt. Die Zahnradpaarung 10 umfasst ein erstes Stirnrad 12 und ein zweites Stirnrad 14, welche in kämmenden Eingriff gebracht sind. Das erste Stirnrad 12 ist dabei vollständig aus einem Material hergestellt, beispielsweise aus Kunststoff oder aus Metall. Das zweite Stirnrad 14 weist ein Außenteil 16, welches einen Zahnkranz 18 mit einer Anzahl von Zähnen 19 bildet, ein Einlegeteil 20 und ein zwischen dem Einlegeteil 20 und dem Außenteil 16 angeordnetes Verbindungsteil 22 auf. Das Verbindungsteil 22 verbindet das Einlegeteil 20 und das Außenteil 16 formschlüssig und/oder materialschlüssig.

Das Außenteil 16 ist aus einem ersten Kunststoff und das Verbindungsteil 22 aus einem zweiten Kunststoff gefertigt, während das Einlegeteil 20 aus Metall besteht. Das Einlegeteil 20 kann als Nabe, Welle oder einer vormontierten Funktionsbaugruppe ausgebildet sein.

Nicht gezeigt ist eine Ausführungsform, in welcher das erste Stirnrad 12 genauso aufgebaut ist wie das zweite Stirnrad 14, so dass auch das erste Stirnrad 12 das Außenteil 16, das Einlegeteil 20 und das Verbindungsteil 22 aufweist.

In Figur 2 ist eine Ausführungsform des zweiten Stirnrads 14 anhand einer prinzipiellen Schnittdarstellung gezeigt. Das zweite Stirnrad 14 weist einen Stirnraddurchmesser D_{SR2} auf, während das Einlegeteil 20 einen Einlegeteildurchmesser D_{ET} aufweist. Das Verhältnis zwischen dem Einlegeteildurchmesser D_{ET} und dem Stirnraddurchmesser D_{SR2} beträgt zwischen 0,1 und 0,8. Im dargestellten Beispiel beträgt das Verhältnis ca. 0,46.

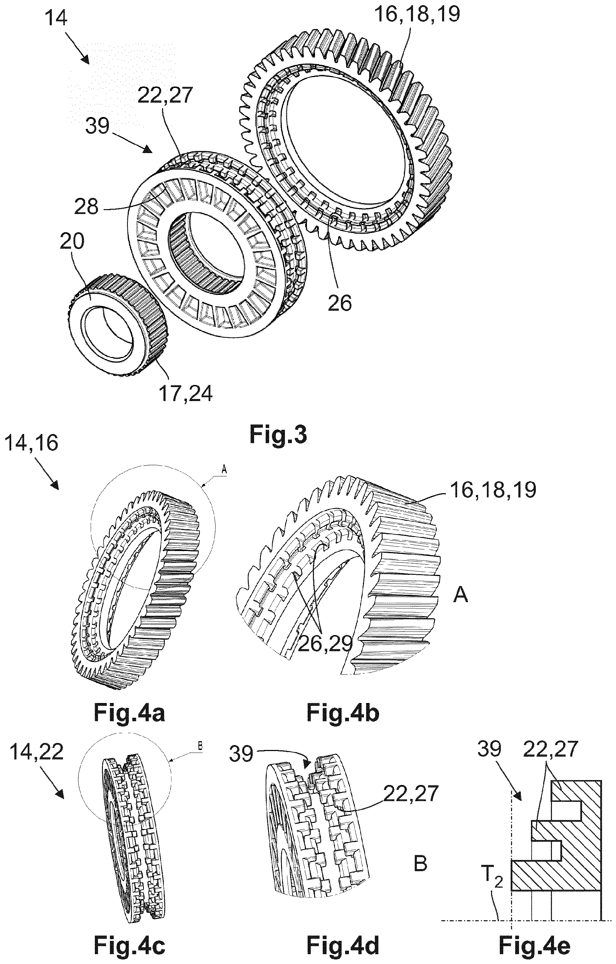

In Figur 3 ist das in Figur 1 dargestellte zweite Stirnrad 14 anhand einer perspektivischen Explosionsdarstellung gezeigt. Man erkennt, dass das Einlegeteil 20 an seiner äußeren Mantelfläche 24, mit der es mit dem Verbindungsteil 22 in Kontakt tritt, Ausnehmungen 17 zum Bereitstellen eines Formschlusses mit dem Verbindungsteil 22 aufweist. Dort, wo das Verbindungsteil 22 mit dem Einlegeteil 20 in Kontakt tritt, ist das Verbindungsteil 22 korrespondierend zu den Ausnehmungen 17 geformt.

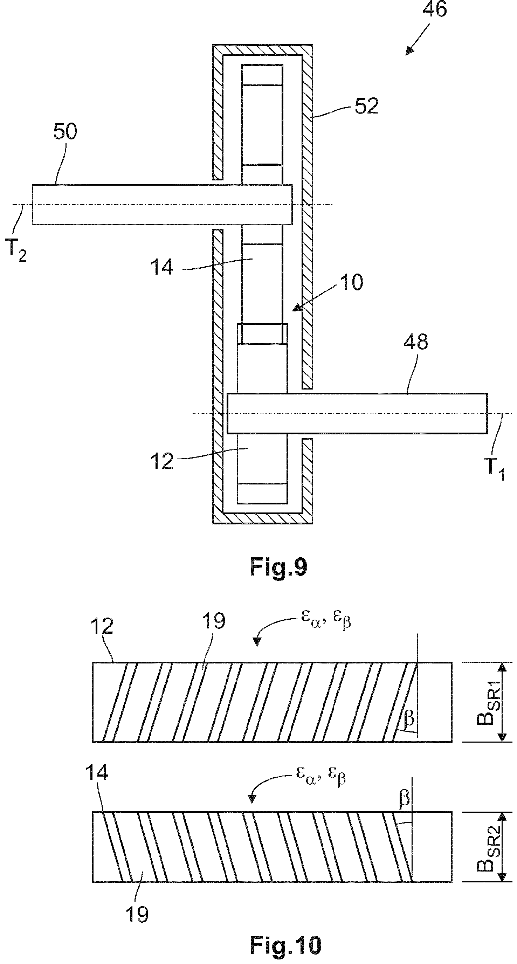

Sowohl aus der Figur 3 und insbesondere aus den Figuren 4a bis 4e ist erkennbar, dass das Außenteil 16 an seiner inneren Mantelfläche 26, mit der es mit dem Verbindungsteil 22 in Kontakt tritt, eine Anzahl von radial nach innen begrenzte Vertiefungen 29 aufweist, um einen Formschluss mit dem Verbindungsteil 22 herzustellen. Das Verbindungsteil 22 weist entsprechende hakenförmige Vorsprünge 27 auf. Wie bereits erläutert, muss der Formschluss zwischen dem Außenteil 16 und dem Verbindungsteil 22 so ausgestaltet sein, dass ein Verrutschen des Außenteils 16 relativ zum Verbindungsteil 22 sowohl entlang als auch um die Drehachse T des zweiten Stirnrads 14 (siehe Figur 9) verhindert wird. Insbesondere aus den Figuren 4d und 4e wird deutlich, dass infolge dieser Anforderung die Vorsprünge 27 derart geformt sind, dass sie Hinterschneidungen 39 bilden, die ohne Verwendung eines Schiebers im Spritzgussverfahren nicht herstellbar sind.

Um diese Situation genauer darstellen zu können, zeigt die Figur 4e eine prinzipielle Halbschnittdarstellung durch das Verbindungsteil 22, wobei die Schnittebene durch die Drehachse T₂ des zweiten Stirnrads 14 verläuft. Insbesondere aus Figur 4e erkennt man, dass die Vorsprünge 27 auf zwei verschiedenen Ebenen angeordnet sind, die jeweils einen unterschiedlichen Durchmesser aufweisen und die bezogen auf die Drehachse T₂ versetzt angeordnet sind. Die Vertiefungen 29 des Außenteils 16 sind korrespondierend ausgestaltet. Sowohl das Außenteil 16 als auch das Verbindungsteil 22 weisen daher einen treppenartigen Aufbau auf. Aufgrund der Anordnung der Vorsprünge 27 und der Vertiefungen 29 kann die Anzahl der Vorsprünge 27 und der Vertiefungen 29 erhöht werden, so dass das oben beschriebene Verrutschen des Außenteils 16 relativ zum Verbindungsteil 22 besonders wirkungsvoll verhindert werden kann.

Insbesondere aus den Figuren 4c bis 4e geht hervor, dass das Verbindungsteil 22 nicht nur eine Hinterschneidung 39 entlang der Drehachse T₂ aufweist, sondern auch senkrecht zur Drehachse T2.

Weiterhin ist aus Figur 3 erkennbar, dass das Verbindungsteil 22 Verstärkungen 28 in Form von Rippen aufweist, mit denen die axiale Steifigkeit mit geringem Materialeinsatz erhöht werden kann.

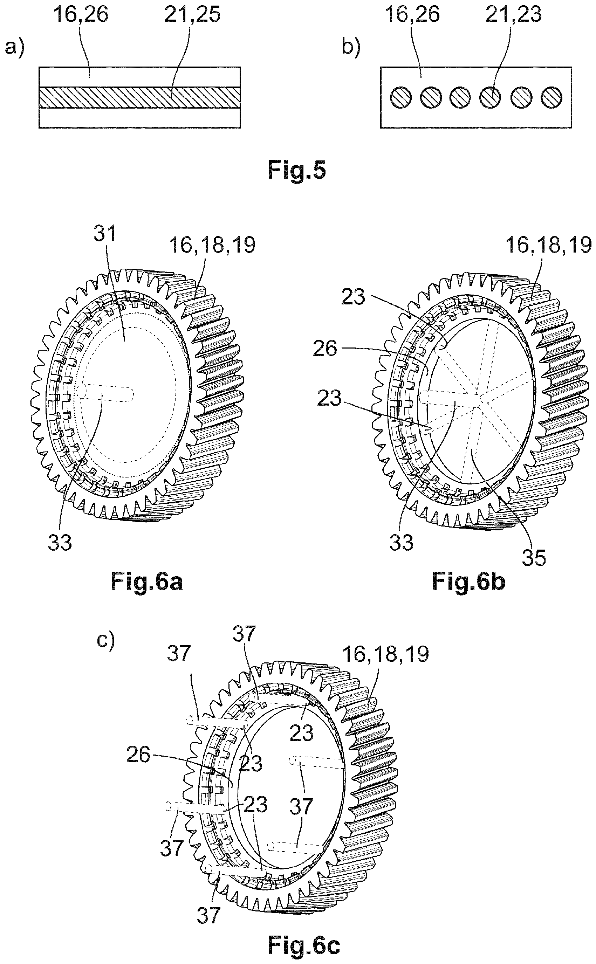

In den Figuren 5a und 5b ist jeweils eine prinzipielle Abwicklung des Außenteils 16 gezeigt, wobei man auf die innere Mantelfläche 26 des Außenteils schaut. Das in Figur 5a dargestellte Ausführungsbeispiel des Außenteils 16 weist einen Anspritzabschnitt 21 auf, der in Form einer zusammenhängenden Anspritzfläche 25 ausgebildet ist. Wie später noch genauer erläutert werden wird, entsteht für den Fall, dass das Außenteil 16 im Schirmangussverfahren hergestellt wird, nach Abschluss des Schirmangussverfahrens einen Überstand, der in einem separaten Verfahrensschritt beispielsweise spanend entfernt werden muss. Aufgrund des Entfernens des Überstands entsteht die Anspritzfläche 21, die sich in ihrer Beschaffenheit von den übrigen, nicht entsprechend behandelten Oberflächen des Außenteils 16 unterscheidet.

Das in Figur 5b dargestellte Ausführungsbeispiel des Außenteils 16 weist eine Anzahl von Anspritzabschnitten 21 auf, die in Form von mehreren Anspritzpunkten 23 ausgebildet sind. Die Anspritzpunkte 23 entstehen bei Verwendung des Punktangussverfahrens dort, wo die Spritzgusskanäle des Spritzgusswerkzeugs enden und in die Kavität des Werkzeugs münden.

In den Figuren 6a bis 6c sind verschiedene Ausführungsformen des Spritzgussverfahrens zum Herstellen des Außenteils 16 anhand von prinzipiellen Darstellungen gezeigt. Figur 5a zeigt einen Schirmanguss, bei dem zum Herstellen des Außenteils 16 ein Werkzeugeinsatz 31 verwendet wird. Der Werkzeugeinsatz 31 wird vom nicht dargestellten Oberwerkzeug und vom nicht dargestellten Unterwerkzeug umringt.

Bei dem in Figur 6b dargestellten Sternangussverfahren weist der Werkzeugeinsatz 31 einen entlang der Drehachse des Außenteils 16 verlaufenden Hauptspritzgusskanal 33 auf, der in insgesamt sechs sternförmig und senkrecht zur Drehachse verlaufende Unterkanäle 35 mündet.

In Figur 5c sind insgesamt sechs Spritzgusskanäle 37 vorhanden, welche am betreffenden Ober- oder Unterwerkzeug angeordnet sind und parallel zur Drehachse verlaufen. Hierbei handelt es sich um ein Punktangussverfahren.

In beiden Fällen bilden sich dort, wo die Unterkanäle 35 bzw. die Spritzgusskanäle 37 enden und in die Kavität münden, die auch in den Figuren 2 und 5b dargestellten Anspritzpunkte 23 im entstehenden Außenteil 16. Je nach Verlauf der Unterkanäle 35 und der Spritzgusskanäle sind die Anspritzpunkte 23 auf der inneren Mantelfläche 26 (Figur 6b oder auf der Stirnfläche des Außenteils 16 (Figur 6c) angeordnet.

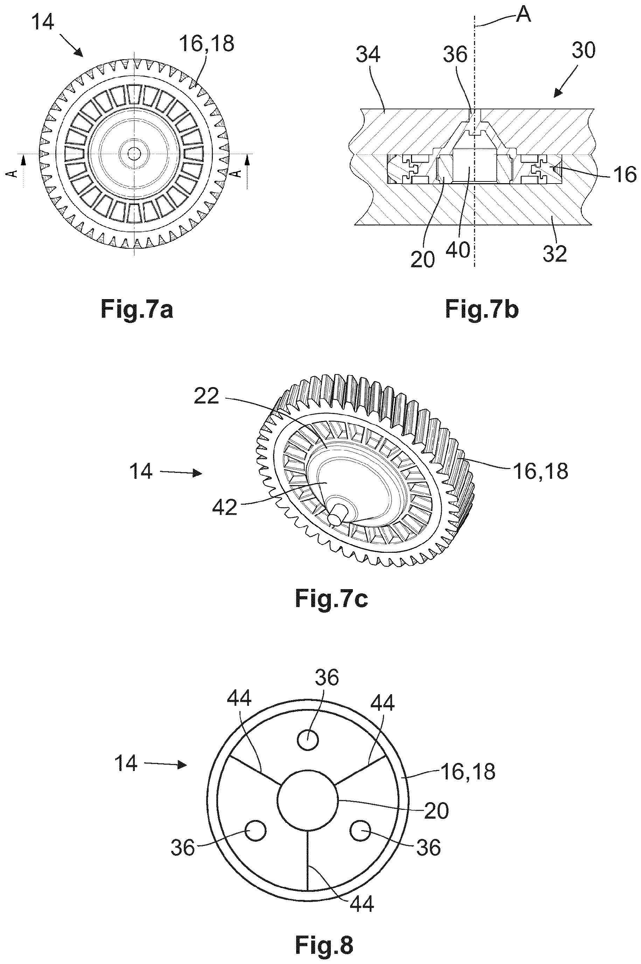

In Figur 7a ist eine prinzipielle Schnittdarstellung durch ein Spritzgusswerkzeug 30 zur Herstellung eines erfindungsgemäßen zweiten Stirnrads 14 im Schirmangussverfahren gezeigt. Das bereits fertiggestellte Einlegeteil 20 und das ebenfalls fertiggestellte Außenteil 16 werden auf einem Boden 32 des Spritzgusswerkzeugs 30 konzentrisch zu einer Werkzeugachse A aufgelegt.

Das Spritzgusswerkzeug 30 weist ein Oberwerkzeug 34 mit einem kegelförmigen Abschnitt auf, welches entlang der Werkzeugachse A bewegbar ist. Konzentrisch zur Werkzeugachse A weist das Oberwerkzeug 34 einen Spritzgusskanal 36 auf, durch welchen eine Kunststoffschmelze in das Innere des Spritzgusswerkzeugs 30 eingebracht werden kann.

Zum Herstellen des Verbindungsteils 22 wird das Oberwerkzeug 34 soweit geschlossen bis, dass es auf dem Außenteil 16 aufliegt. Anschließend wird die Kunststoffschmelze in das Innere des Spritzgusswerkzeugs 30 eingespritzt. Um zu verhindern, dass die Kunststoffschmelze in einen vom Einlegeteil 20 umschlossenen Hohlraum 38 (vgl. Figur 2) eindringt, wird vor dem Schließen des Werkzeugs ein Werkzeugeinsatz 40 in den Hohlraum 38 eingesetzt, der diesen vollständig ausfüllt und aus diesem hervorragt. Der Werkzeugeinsatz 40 ist üblicherweise konzentrisch mit dem Boden 32 verbunden.

In Figur 7b ist das zweite Stirnrad 14 in einer perspektivischen Darstellung nach dem Entformen aus dem Spritzgusswerkzeug 30 gezeigt. Man erkennt, dass das Verbindungsteil 22 einen kegelförmigen Überstand 42 aufweist, welcher in einem spanenden Arbeitsgang entfernt werden muss.

Figur 8 zeigt eine prinzipielle Darstellung zum Verdeutlichen des Punktangussverfahrens. Beim Punktangussverfahren wird die Kunststoffschmelze durch eine Anzahl von Spritzgusskanälen 36, die typischerweise konzentrisch um das Einlegeteil 20 angeordnet sind, in den Zwischenraum zwischen dem Außenteil 16 und dem Einlegeteil 20 gespritzt. Im dargestellten Beispiel sind drei Spritzgusskanäle 36 vorhanden. Dort, wo die Fließfronten der Kunststoffschmelzen, die durch benachbarte Spritzgusskanäle 36 in den Zwischenraum eingespritzt worden sind, aufeinandertreffen, entstehen Bindenähte 44. Im Gegensatz zum Schirmangussverfahren ist kein Werkzeugeinsatz 40 notwendig, um zu verhindern, dass die Kunststoffschmelze in den vom Einlegeteil 20 umschlossenen Hohlraum 38 gelangt. Das Oberwerkzeug 34 kann so gestaltet werden, dass es weit geschlossen werden kann, bis es sowohl auf dem Einlegeteil 20 als auch auf dem Außenteil 16 aufliegt. Es entsteht kein Überstand 42, welcher nach dem Entformen entfernt werden muss.

In Figur 9 ist eine prinzipielle Darstellung eines Stirnradgetriebes 46 mit einer erfindungsgemäßen Zahnradpaarung 10 gezeigt. Das erste Stirnrad 12 ist drehfest mit einer um eine erste Drehachse T₁ Antriebswelle 48 und das zweite Stirnrad 14 drehfest mit einer um eine zweite Drehachse T₂ drehbare Abtriebswelle 50 verbunden. Die Antriebswelle 48 und die Abtriebswelle 50 verlaufen parallel, aber versetzt zueinander. Das erste Stirnrad 12 und das zweite Stirnrad 14 sind in einem Innenraum eines Getriebegehäuses 52 kämmend angeordnet. Die Antriebswelle 48 und die Abtriebswelle 50 sind auf nicht näher gezeigte Weise gelagert. Das Verbindungsteil 22 wird aus einem Material gefertigt, welches an die Wärmeausdehnung des Getriebegehäuses 52 und dem ersten Stirnrad 12 angepasst ist. Ziel ist es dabei, das Getriebegehäuse 52 so zu gestalten, dass die Wärmeausdehnung des Getriebegehäuses 52 in etwa gleich groß ist wie die Summe der Wärmeausdehnungen der beiden Stirnräder 12, 14 der Zahnradpaarung 10, um das Auftreten von zu großen oder zu kleinen Zahnspiel und den mit diesem einhergehenden negativen Auswirkungen auf den Eingriff der beiden Stirnräder 12, 14 zu minimieren.

In Figur 10 sind das erste Stirnrad 12 und das zweite Stirnrad 14 anhand einer prinzipiellen Abwicklung gezeigt. Das erste Stirnrad 12 weist eine erste Breite B_{SR1} und das zweite Stirnrad 14 eine zweite Breite B_{SR2} auf. Die erste Breite B_{SR1} ist größer als die zweite Breite B_{SR2}, wodurch verhindert wird, dass die scharfe Stirnkante des Zahnkranzes insbesondere aus Metall des ersten Stirnrads 12 in den Zahnkranz 18 aus dem ersten Kunststoff einläuft und damit zu erhöhtem Verschleiß führt. Wie auch aus den Figuren 1 und 3 erkennbar, weist die Zahnradpaarung 10 eine Schrägverzahnung auf, so dass das erste Stirnrad 12 und das zweite Stirnrad 14 einen Schrägungswinkel β aufweisen, der zwischen 10° und 30° und im dargestellten Beispiel ca. 20°. Aus dem nicht näher gezeigten Profil der Zähne 19 ergibt sich eine Profilüberdeckung ε_{α} die zwischen 1 und 2 beträgt. Insbesondere aufgrund des gewählten Schrägungswinkels β ergibt sich eine Sprungüberdeckung ε_{β}, die im vorliegenden Fall einen Wert von 1 oder 2 aufweisen soll.

### Bezugszeichenliste

- 10: Zahnradpaarung
- 12: erstes Stirnrad
- 14: zweites Stirnrad
- 16: Außenteil
- 17: Ausnehmung
- 18: Zahnkranz
- 19: Zahn

- 20: Einlegeteil
- 21: Anspritzabschnitt
- 22: Verbindungsteil
- 23: Anspritzpunkt
- 24: äußere Mantelfläche
- 25: Anspritzfläche
- 26: innere Mantelfläche
- 27: Vorsprung
- 28: Verstärkung
- 29: Vertiefung

- 30: Spritzgusswerkzeug
- 31: Werkzeugeinsatz
- 32: Boden
- 33: Hauptspritzgusskanal
- 34: Oberwerkzeug
- 35: Unterkanal
- 36: Spritzgusskanal
- 37: Spritzgusskanal
- 38: Hohlraum
- 39: Hinterschneidungen

- 40: Werkzeugeinsatz
- 42: Überstand
- 44: Bindenähte
- 46: Stirnradgetriebe
- 48: Antriebswelle

- 50: Abtriebswelle
- 52: Getriebegehäuse

- A: Werkzeugachse
- b_{SR1}: erste Breite
- b_{SR2}: zweite Breite
- d_{SR2}: Stirnraddurchmesser
- d_{ET}: Einlegeteildurchmesser
- T₁: erste Drehachse
- T₂: zweite Drehachse

- β: Schrägungswinkel
- ε_{α}: Profilüberdeckung
- ε_{β}: Sprungüberdeckung

## Patentansprüche

1. Stirnrad zur Verwendung in einem Stirnradgetriebe (46), umfassend
- ein Außenteil (16) mit einem Zahnkranz (18) aus einem ersten Kunststoff und mit einer Anzahl von Anspritzabschnitten (21),
- ein Einlegeteil (20) aus Metall, und
- ein zwischen dem Einlegeteil (20) und dem Außenteil (16) angeordnetes Verbindungsteil (22) aus einem zweiten Kunststoff zum formschlüssigen Verbinden des Einlegeteils (20) und des Außenteils (16),
**dadurch gekennzeichnet, dass**
- die Anspritzabschnitte (21) vom Verbindungsteil (22) überdeckt sind, und
- das Verbindungsteil (22) sowohl entlang als auch senkrecht zu einer Drehachse (T) des Stirnrads (14) Hinterschneidungen (39) aufweist.

2. Zahnradpaarung für ein Stirnradgetriebe (46), umfassend
- ein erstes Stirnrad (12), und
- ein zweites Stirnrad (14) nach Anspruch 1, die miteinander kämmend in Eingriff stehen, wobei
- das erste Stirnrad (12) ganz oder teilweise aus Metall oder Kunststoff besteht.

3. Zahnradpaarung nach Anspruch 2,
**dadurch gekennzeichnet, dass** das zweite Stirnrad (14) einen Stirnraddurchmesser (d_{SR2}) und das Einlegeteil (20) einen Einlegeteildurchmesser (d_{ET}) aufweisen, und das Verhältnis zwischen dem Einlegeteildurchmesser (d_{ET}) und dem Stirnraddurchmesser (d_{SR2}) zwischen 0,1 und 0,8 und insbesondere zwischen 0,1 und 0,5 beträgt.

4. Zahnradpaarung nach einem der Ansprüche 2 oder 3,
**dadurch gekennzeichnet, dass** das erste Stirnrad (12) eine erste Breite (b_{SR1}) und das zweite Stirnrad (14) eine zweite Breite (b_{SR2}) aufweist, wobei die erste Breite (b_{SR1}) größer als die zweite Breite (b_{SR2}) ist.

5. Zahnradpaarung nach einem der Ansprüche 2 bis 4,
**dadurch gekennzeichnet, dass** das erste Stirnrad (12) und das zweite Stirnrad (14) jeweils einen Schrägungswinkel (β) von zwischen 10° und 30° aufweisen.

6. Zahnradpaarung nach einem der Ansprüche 2 bis 5,
**dadurch gekennzeichnet, dass** das Verbindungsteil (22) Verstärkungen (28) zum Erhöhen der axialen Steifigkeit aufweist.

7. Zahnradpaarung nach einem der Ansprüche 2 bis 6,
**dadurch gekennzeichnet, dass** der erste Kunststoff ein Hochleistungsthermoplast oder ein technischer Thermoplast und/oder der zweite Kunststoff ein Hochleistungsthermoplast, ein technischer Thermoplast oder ein Duroplast ist.

8. Stirnradgetriebe, umfassend eine Zahnradpaarung (10) nach einem der vorherigen Ansprüche 2 bis 7, wobei das erste Stirnrad (12) mit einer Antriebswelle (48) und das zweite Stirnrad (14) mit einer Abtriebswelle (50) oder umgekehrt verbunden sind und das erste Stirnrad (12) mit dem zweiten Stirnrad (14) kämmend in Eingriff steht.

9. Stirnradgetriebe (46) nach Anspruch 8,
**dadurch gekennzeichnet, dass** das Stirnradgetriebe (46) eine Profilüberdeckung (ε_{α}) zwischen 1 und 2 aufweist.

10. Stirnradgetriebe (46) nach einem der Ansprüche 8 oder 9,
**dadurch gekennzeichnet, dass** das Stirnradgetriebe (46) eine Sprungüberdeckung (ε_{β}) mit den Werten 0 oder 1 oder 2 aufweist.

11. Verfahren zum Herstellen eines Stirnrads, wobei das Stirnrad (14) ein Außenteil (16) mit einem Zahnkranz (18) aus einem ersten Kunststoff, ein Einlegeteil (20) aus Metall, und ein zwischen dem Einlegeteil (20) und dem Außenteil (16) angeordnetes Verbindungsteil (22) aus einem zweiten Kunststoff zum formschlüssigen Verbinden des Einlegeteils (20) und des Außenteils (16) umfasst, wobei das Verfahren folgenden Schritt aufweist:
- Spritzgießen des Außenteils (15) unter Ausbildung einer Anzahl von Anspritzabschnitten (21), und
- Spritzgießen des Verbindungsteils (22) zwischen das Außenteil (16) und das Einlegeteil (20) derart, dass die Anspritzabschnitte (21) vom Verbindungsteil überdeckt werden und das Verbindungsteil (22) zumindest entlang einer Drehachse des Stirnrads Hinterschneidungen (39) aufweist.

12. Verfahren nach Anspruch 11, umfassend folgenden Schritt
- Spritzgießen des Verbindungsteils (22) zwischen das Außenteil (16) und das Einlegeteil (20) derart, dass das Verbindungsteil (22) zumindest entlang einer Drehachse des Stirnrads Hinterschneidungen (39) aufweist.

13. Verfahren nach einem der Ansprüche 11 oder 12,
**dadurch gekennzeichnet, dass** der Schritt des Spritzgießens des Außenteils unter Verwendung des Punktangussverfahrens durchgeführt wird, wobei die Anspritzabschnitte (21) als eine Anzahl von Anspritzpunkten (23) ausgebildet werden.

14. Verfahren nach einem der Ansprüche 11 oder 12,
**dadurch gekennzeichnet, dass** der Schritt des Spritzgießens des Außenteils unter Verwendung des Schirmangussverfahrens durchgeführt wird, wobei die Anspritzabschnitte (21) als eine Anzahl von Anspritzflächen (25) ausgebildet werden.

## Claims

1. Spur gear for use in a spur gear unit (46), comprising
- an outer part (16), having a ring gear (18) made of a first plastic, and having numerous injection sections (21),
- an insertion part (20) made of metal, and
- a connection part (22), arranged between the insertion part (20) and the outer part (16), for the form-fitting connection of the insertion part (20) and the outer part (16), **characterized in that**
- the injection sections (21) are covered by the connection part (22), and
- the connection part (22) comprises, both along, as well as vertically to an axis of rotation (T) of the spur gear (14), undercuts (39).

2. Gear pair for a spur gear unit (46), comprising
- a first spur gear (12), and
- a second spur gear (14) in accordance with claim 1, both of which are in meshing engagement with each other, wherein
- the first spur gear (12) is entirely or partially made of metal or plastic.

3. Gear pair in accordance with claim 2,
**characterized in that** the second spur gear (14) comprises a spur gear diameter (d_{SR2}) and the insertion part (20) comprises an insertion part diameter (d_{ET}), and **in that** the ratio between the insertion part diameter (d_{ET}) and the spur gear diameter (d_{SR2}) is between 0.1 and 0.8, and in particular, between 0.1 and 0.5.

4. Gear pair in accordance with either of claims 2 or 3,
**characterized in that** the first spur gear (12) has a first width (b_{SR1}), and **in that** the second spur gear (14) has a second width (b_{SR2}), wherein the first width (b_{SR1}) is larger than the second width (b_{SR2}).

5. Gear pair in accordance with any of the claims 2 to 4,
**characterized in that** the first spur gear (12) and the second spur gear (14) each comprise a helix angle (β) of between 10° and 30°.

6. Gear pair in accordance with any of the claims 2 to 5,
**characterized in that** the connection part (22) comprises reinforcements (28) for increasing the axial stiffness.

7. Gear pair in accordance with any of the claims 2 to 6,
**characterized in that** the first plastic is a high-performance thermoplastic or an engineering thermoplastic and/or the second plastic is a high-performance thermoplastic, an engineering thermoplastic, or a thermoset.

8. Spur gear unit, comprising a gear pair (10) in accordance with any of the claims 2 to 7, wherein the first spur gear (12) is connected to a drive shaft (48) and the second spur gear (14) to an output shaft (50), or they are connected vice versa and the first spur gear (12) is in meshing engagement with the second spur gear (14).

9. Spur gear unit (46) in accordance with claim 8,
**characterized in that** the spur gear unit (46) comprises a transverse contact ratio (ε_{α}) of between 1 and 2.

10. Spur gear unit (46) in accordance with either claim 8 or 9,
**characterized in that** the spur gear unit (46) comprises an overlap ratio (ε_{β}) having the values of 0 or 1 or 2.

11. Method for manufacturing a spur gear, wherein the spur gear (14) comprises an outer part (16) having a ring gear (18) made of a first plastic, an insertion part (20) made of metal, and a connection part (22), arranged between the insertion part (20) and the outer part (16) and made of a second plastic, for the form-fitting connection of the insertion part (20) and the outer part (16), wherein the method comprises the following steps:
- Injection molding of the outer part (16), forming numerous injection sections (21), and
- injection molding of the connection part (22) between the outer part (16) and the insertion part (20) such that the injection sections (21) are covered by the connection part (22) and that the injection sections (21) comprises, at least along an axis of rotation of the spur gear, undercuts (39).

12. Method in accordance with claim 11, comprising the following step:
- Injection molding of the connection part (22) between the outer part (16) and the insertion part (22) such that the injection part (22) comprises, at least along an axis of rotation of the spur gear, undercuts (39).

13. Method in accordance with either of claims 11 or 12,
**characterized in that** the step of injection-molding the outer part is carried out using a pinpoint gate molding process, wherein the injection sections (21) are formed as numerous injection points (23).

14. Method in accordance with either of claims 11 or 12,
**characterized in that** the step of injection-molding the outer part is carried out using a diaphragm gate molding process, wherein the injection sections (21) are formed as numerous injection surfaces (25).

## Revendications

1. Pignon droit pour un engrenage droit (46) comprenant :
- une partie extérieure (16) avec une couronne dentée (18) en une première matière plastique et un nombre de segments injectés (21),
- un insert (20) en métal, et
- une partie de liaison (22) entre l'insert (20) et la partie extérieure (16), cette partie étant en une seconde matière plastique pour une liaison par la forme de l'insert (20) et de la partie extérieure (16),
pignon droit **caractérisé en ce que**
- les segments surmoulés par injection (21) sont couverts par la partie de liaison (22), et
- la partie de liaison (22) comporte des contredépouilles (39) à la fois le long d'un axe de rotation (T) et perpendiculairement à cet axe du pignon droit (14).

2. Paire de pignons droits pour un engrenage droit (46) comprenant :
- un premier pignon droit (12), et
- un second pignon droit (14) selon la revendication 1, qui sont en prise l'un avec l'autre,
- le premier pignon droit (12) étant totalement ou partiellement en métal ou en matière plastique.

3. Paire de pignons droits selon la revendication 2,
**caractérisée en ce que**
le second pignon droit (14) a un diamètre de pignon(d_{SR2}) et l'insert (20) a un diamètre d'insert (d_{ET}) et le rapport entre le diamètre de l'insert (d_{ET}) et le diamètre de pignon droit (d_{SR2}) est compris entre 0,1 et 0,8 et notamment entre 0,1 et 0,5.

4. Paire de pignons droits selon l'une des revendications 2 ou 3,
**caractérisée en ce que**
le premier pignon droit (12) a une première largeur (b_{SR1}) et le second pignon droit (14) a une seconde largeur (b_{SR2}), la première largeur (b_{SR1}) étant supérieure à la seconde largeur (b_{SR2}).

5. Paire de pignons droits selon l'une des revendications 2 à 4,
**caractérisée en ce que**
le premier pignon droit (12) et le second pignon droit (14) ont respectivement un angle d'inclinaison de la denture (β) compris entre 10° et 30°.

6. Paire de pignons droits selon l'une des revendications 2 à 5,
**caractérisée en ce que**
la partie de liaison (22) comporte des renforts (28) pour augmenter la rigidité axiale.

7. Paire de pignons droits selon l'une des revendications 2 à 6,
**caractérisée en ce que**
la première matière plastique est une matière thermoplastique haute performance ou une matière thermoplastique technique et/ou la seconde matière plastique est une matière thermoplastique haute performance, une matière thermoplastique technique ou une matière plastique thermodurcissable.

8. Engrenage droit comprenant une paire de pignons droits (10) selon l'une des revendications précédentes 2 à 7,
le premier pignon droit (12) étant relié à un arbre d'entraînement (48) et le second pignon droit (14) étant relié à un arbre entraîné (50) ou inversement et le premier pignon droit (12) engrène avec le second pignon droit (14).

9. Engrenage droit (46) selon la revendication 8,
**caractérisé par**
un rapport de conduite apparent (εα) compris entre 1 et 2.

10. Engrenage droit (46) selon l'une des revendications 8 ou 9,
**caractérisé en ce que**
l'engrenage droit (46) a un rapport de recouvrement (ε_{β}) compris entre 0 et 1 ou 2.

11. Procédé de réalisation d'un pignon droit selon lequel le pignon droit (14) a une partie extérieure (16) avec une couronne d'entrée (18) en une première matière plastique, un insert (20) en métal et entre l'insert (20) et la partie extérieure (16), une partie de liaison (22) en une seconde matière plastique pour une liaison par la forme de l'insert (20) et de la partie extérieure (16),
le procédé comprenant les étapes suivantes consistant à :
- injecter la partie extérieure (15) en formant un nombre de segments d'injection (21), et
- injecter la partie de liaison (22) entre la partie extérieure (16) et l'insert (20) de façon que les segments injectés (21) soient couverts par la partie de liaison et la partie de liaison (22) présente les contredépouilles (39) au moins le long de l'axe de rotation du pignon droit.

12. Procédé selon la revendication 11,
comprenant les étapes consistant à :
- injecter la partie de liaison (22) entre la partie extérieure (16) et l'insert (20) de façon que la partie de liaison (22) comporte des contredépouilles (39) au moins selon l'axe de rotation du pignon droit.

13. Procédé selon l'une des revendications 11 ou 12,
**caractérisé en ce que**
l'étape d'injection de la partie extérieure se fait en utilisant un procédé de raccordement ponctuel, selon lequel
les segments à injecter (21) sont réalisés sous la forme d'un ensemble de points de surmoulage par injection (23).

14. Procédé selon l'une des revendications 11 ou 12,
**caractérisé en ce que**
l'étape d'injection de la partie extérieure se fait en utilisant le procédé d'injection en voûte selon lequel les segments à injecter (21) sont réalisés sous la forme d'un ensemble de surfaces de surmoulage (25) par injection.
